# EUROPEAN PATENT APPLICATION

(11) **EP 4 658 004 A1**
(43) Date of publication of application: **03.12.2025**
(21) Application number: 25175738.1
(22) Date of filing: 12.05.2025
(51) Int. Cl.: H05K 5/00

(54) **CONNECTOR**

(30) Priority: 28.05.2024 JP 2024086044
(71) Applicant: Yazaki Corporation, Tokyo 108-0075 (JP)
(72) Inventor: Kishibata, Yuya, Makinohara-shi, Shizuoka, 421-0407 (JP)
(74) Representative: Grünecker Patent- und Rechtsanwälte PartG mbB

(57) **Abstract**

An inner housing (30) includes a first holding portion (33) protruding from each of paired side wall surfaces (32), and a pair of second holding portions (34) protruding from each of the paired side wall surfaces while not facing the first holding portion in each of a connector inserting and removing direction and an assembling direction. An outer housing member (50) includes a sandwiched portion (52) protruding from each of inner wall surfaces (51a) of paired side wall portions (51), extending in the assembling direction, and sandwiched between the first holding portion and the pair of second holding portions at each of the side wall surfaces.

## Description

### BACKGROUND OF THE INVENTION

### 1. Field of the Invention

The present invention relates to a connector.

### 2. Description of the Related Art

A connector containing a circuit board has conventionally been known. This connector includes the circuit board, a terminal fitting connected to the circuit board, an inner housing accommodating and holding the terminal fitting, and an outer housing accommodating the circuit board, the terminal fitting, and the inner housing while exposing the inside of a hood portion of the inner housing. The outer housing includes an outer housing member and a cover member between which the circuit board, the terminal fitting, and the inner housing are put in an assembling direction orthogonal to a connector inserting and removing direction. The outer housing member includes a first opening exposing the hood portion in the connector inserting and removing direction and a second opening opening in the assembling direction, and is assembled to the cover member so that the second opening is closed. This type of connector is disclosed, for example, in Publication number of Japanese translation of PCT international application JP 2018-526800A.

In such a connector, the outer housing supports the inner housing to reduce a load on a connection portion between the circuit board and the terminal fitting caused by external force, thereby maintaining the connected state therebetween. For example, in the connector in Publication number of Japanese translation of PCT international application JP 2018-526800A, a pair of flanges with a gap therebetween in a connector inserting and removing direction is disposed on an inner housing, and a protrusion is disposed on an inner wall surface of an outer housing member to be inserted into the gap. In this connector, a plurality of crush ribs are disposed on one of the flanges, and the protrusion inserted along an assembling direction crushes the crush ribs, whereby an outer housing supports the inner housing. This connector is viable if the inner housing is molded with a pair of molds with the mold opening direction coinciding with the assembling direction. However, the inner housing cannot be molded using a pair of molds with the mold opening direction coinciding with the connector inserting and removing direction.

### SUMMARY OF THE INVENTION

Thus, an object of the present invention is to provide a connector that can be applied to an inner housing with a mold opening direction coinciding with a connector inserting and removing direction.

A connector includes a circuit board; a terminal fitting connected to the circuit board; an inner housing including a hood portion configured to allow engaging connection of a target connector, the inner housing accommodating and holding the terminal fitting while an engaging connection portion for a target terminal fitting is disposed inside the hood portion; and an outer housing accommodating the circuit board, the terminal fitting, and the inner housing while exposing an inside of the hood portion, the outer housing including an outer housing member and a cover member, the circuit board, the terminal fitting, and the inner housing being sandwiched between the outer housing member and the cover member in an assembling direction orthogonal to a connector inserting and removing direction relative to the target connector, the inner housing including a pair of side wall surfaces located at both ends in a direction orthogonal to the connector inserting and removing direction and the assembling direction; a first holding portion protruding from each of the paired side wall surfaces; and a pair of second holding portions protruding from each of the paired side wall surfaces while not facing the first holding portion in each of the connector inserting and removing direction and the assembling direction, the outer housing member including a first opening exposing the hood portion in the connector inserting and removing direction; a second opening opening in the assembling direction; a side wall portion provided for each of the side wall surfaces, an inner wall surface of the side wall portion being disposed facing the side wall surface of the inner housing; and a sandwiched portion protruding from each of the inner wall surfaces of the side wall portions provided in a pair, the sandwiched portion extending in the assembling direction and being sandwiched between the first holding portion and the pair of second holding portions at each of the side wall surfaces, the outer housing member being assembled to the cover member so that the second opening is closed, the first holding portion including a reference lock portion located at an end portion on a side having the pair of second holding portions in the connector inserting and removing direction, the reference lock portion locking a first lock portion, on a side having the first holding portion, of the sandwiched portion in a reference position in the connector inserting and removing direction, the pair of second holding portions including crush ribs located at an end portion on a side having the first holding portion in the connector inserting and removing direction, the crush ribs being crushed by a second lock portion, on a side having the pair of second holding portions, of the sandwiched portion, and the sandwiched portion being sandwiched between the first holding portion and the pair of second holding portions in the connector inserting and removing direction by using the reference lock portion locking the first lock portion and the crush ribs crushed by the second lock portion.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is an exploded perspective view illustrating a connector of an embodiment;
FIG. 2 is a perspective view illustrating the connector of the embodiment;
FIG. 3 is a sectional view taken along line X-X in FIG. 2;
FIG. 4 is a perspective view describing a circuit board and a terminal fitting;
FIG. 5 is a perspective view illustrating an inner housing;
FIG. 6 is a plan view of the inner housing when viewed from a side;
FIG. 7 is a plan view of a main portion of the inner housing when viewed from the front on a hood portion side;
FIG. 8 is a plan view of the main portion of the inner housing when viewed from the back; and
FIG. 9 is a plan view of the main portion of the inner housing when viewed from the top.

### DETAILED DESCRIPTION OF THE PREFERRED EMBODIMENTS

An embodiment of a connector according to the present invention will be described in detail below with reference to the drawings. Note that this embodiment should not be construed to limit this invention.

### Embodiment

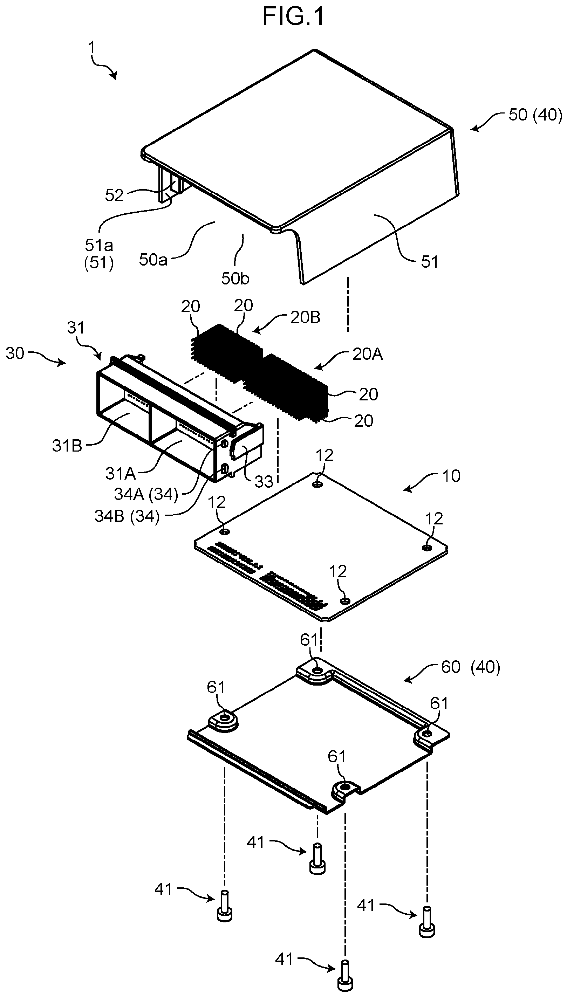

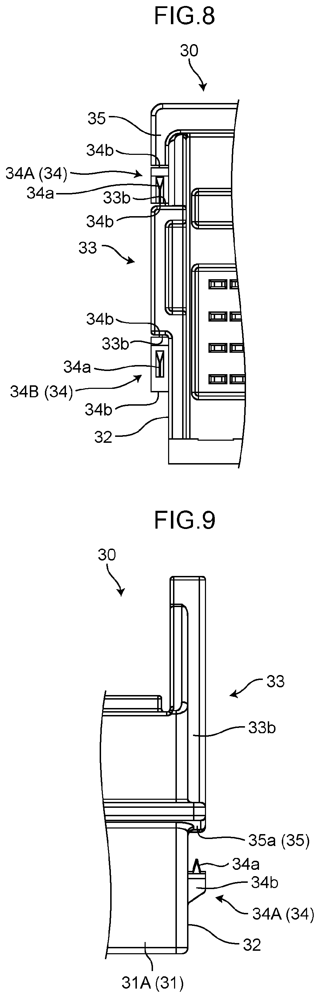

One embodiment of the connector according to the present invention will be described with reference to FIGS. 1 to 9.

Reference signs 1 in FIGS. 1 to 3 indicate the connector of this embodiment. This connector 1 contains a circuit board 10 and includes the following constituent components. This connector 1 includes the circuit board 10, terminal fittings 20 connected to this circuit board 10, an inner housing 30 accommodating and holding these terminal fittings 20, and an outer housing 40 accommodating these circuit board 10, terminal fittings 20, and inner housing 30 (FIGS. 1 to 3).

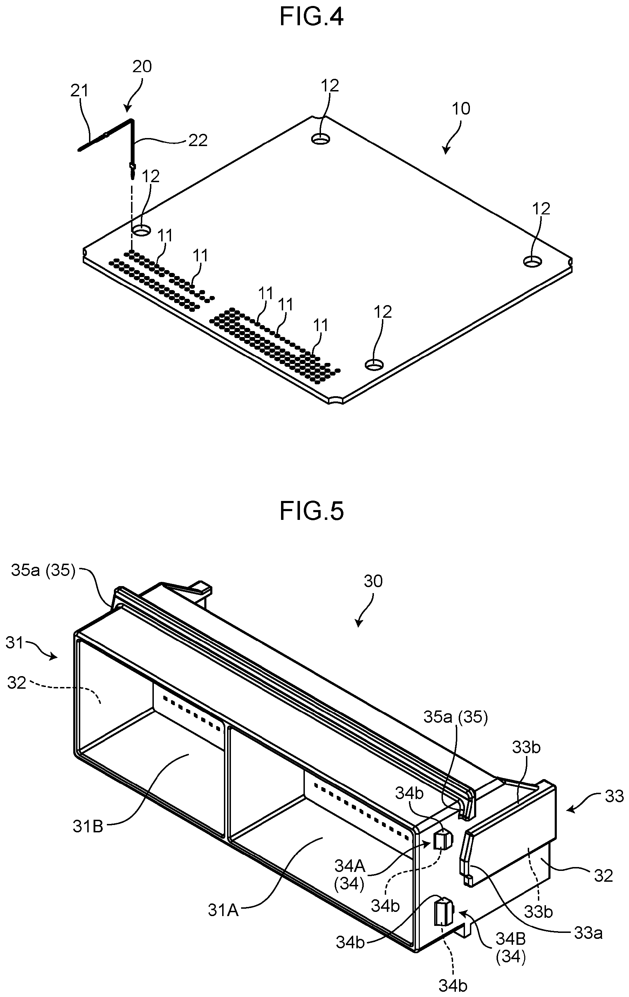

The circuit board 10 is, for example, a rectangular and planar printed circuit board (PCB), and, to its wiring pattern, the terminal fittings 20 are physically and electrically connected (FIGS. 1 and 4).

Each terminal fitting 20 is a press-fit terminal molded like an L-shaped shaft and is broadly divided into an engaging connection portion 21 on one side when viewed from an L-shaped bent portion and a press-fit portion 22 on the other side when viewed from the bent portion (FIG. 4). A plurality of the terminal fittings 20 are prepared for each circuit.

The engaging connection portion 21 is a male terminal portion connected through engagement to a target terminal fitting (not illustrated) of a target connector and extends in its engaging connection direction (FIG. 4). The press-fit portion 22 is inserted into a through-hole 11 of the circuit board 10 and is physically and electrically connected to the through-hole 11 by using reaction brought by elastic deformation (FIG. 4). This press-fit portion 22 is further soldered to a land of the through-hole 11.

The terminal fittings 20 are mounted on the circuit board 10 while the engaging connection directions of the engaging connection portions 21 are in the same direction. This connector 1 includes a plurality of the terminal fittings 20 of which the engaging connection portions 21 are aligned at regular intervals in one direction orthogonal to the engaging connection direction and, for each of the terminal fittings 20, another plurality of the terminal fittings 20 of which the engaging connection portions 21 are aligned at regular intervals in the other direction orthogonal to the engaging connection direction. In this connector 1, the tip positions of the engaging connection portions 21 of the terminal fittings 20 are adjusted in the same position in the engaging connection direction. Thus, this connector 1 includes a plurality of types of the terminal fittings 20 of which the shaft lengths differ depending on the mounted positions.

This connector 1 includes two combinations of the terminal fittings 20, although the numbers are different. Hereinafter, for convenience, one combination of the terminal fittings 20 is referred to as a first terminal group 20A, and the other combination of the terminal fittings 20 as a second terminal group 20B (FIG. 1).

The inner housing 30 is molded from an insulating material, such as synthetic resin. This inner housing 30 includes a hood portion 31 allowing engaging connection of the target connector and accommodates and holds the terminal fittings 20 of which the engaging connection portions 21 are disposed inside the hood portion 31 (FIGS. 1 to 3).

The hood portion 31 is formed to have a square tube shape with the tube axis direction coinciding with a connector inserting and removing direction relative to the target connector (a direction of inserting the connector into the target connector, a direction, opposite to this connector inserting direction, of removing the connector from the target connector) and allows the target connector to be inserted from an opening at one end.

The hood portion 31 described herein has an inside partitioned into two spaces by a partition wall and is broadly divided into a first hood portion 31A having one of the spaces inside and a second hood portion 31B having the other space inside (FIG. 1). Inside the first hood portion 31A, the engaging connection portions 21 of the terminal fittings 20 composing the first terminal group 20A are disposed. Inside the second hood portion 31B, the engaging connection portions 21 of the terminal fittings 20 composing the second terminal group 20B are disposed.

This inner housing 30 holds the engaging connection portions 21 of all the terminal fittings 20 and exposes the press-fit portions 22 of all the terminal fittings 20. This inner housing 30 is held by the circuit board 10 via the press-fit portions 22 of all the terminal fittings 20.

The outer housing 40 is molded from a synthetic resin material or a metal material, such as aluminum. This outer housing 40 accommodates the circuit board 10, the terminal fittings 20, and the inner housing 30 while exposing the inside of the hood portion 31 (FIGS. 1 to 3).

The outer housing 40 includes an outer housing member 50 and a cover member 60 between which the circuit board 10, the terminal fittings 20, and the inner housing 30 are put in an assembling direction orthogonal to the connector inserting and removing direction (FIGS. 1 to 3).

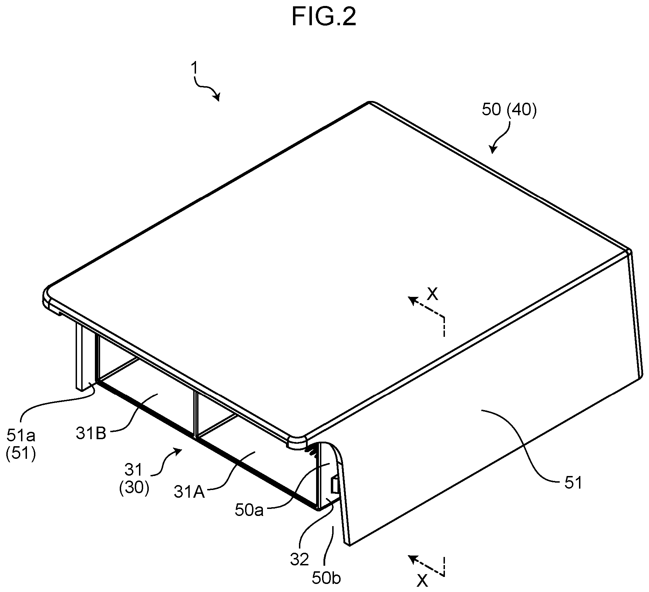

The outer housing member 50 includes a first opening 50a exposing the hood portion 31 in the connector inserting and removing direction and a second opening 50b opening in the assembling direction (FIGS. 1 and 2). This outer housing member 50 is assembled to the cover member 60 so that the second opening 50b is closed.

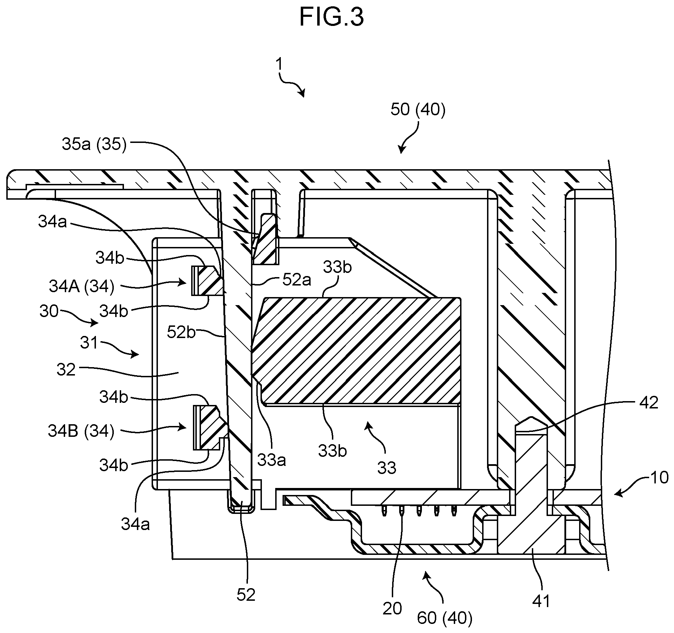

In this connector 1, the circuit board 10 is disposed on the second opening 50b side. The circuit board 10 is sandwiched between the outer housing member 50 and the cover member 60. For example, in the outer housing 40 described herein, the outer housing member 50 and the cover member 60 are fixed by screwing in a plurality of positions. Thus, in this connector 1, the circuit board 10, the outer housing member 50, and the cover member 60 are fixed together. Herein, penetrating holes 12 and 61 into which male thread members 41 are inserted are defined in four positions in the circuit board 10 and the cover member 60, and four female thread portions 42 are disposed inside the outer housing member 50 (FIGS. 1 and 3). In this connector 1, the male thread members 41 passed through the respective penetrating holes 12 and 61 are screwed with the female thread portions 42, whereby the circuit board 10, the outer housing member 50, and the cover member 60 are fixed together.

In this connector 1, a load from the target connector at the time of engaging connection of the connector or road input or the like to a vehicle may apply external force to the circuit board 10, the terminal fittings 20, and the inner housing 30. For example, the external force includes force transmitted to the inner housing 30 and the terminal fittings 20 because of a load from the target connector at the time of engaging connection of the connector, force transmitted from the target connector to the inner housing 30 and the terminal fittings 20 because of a touch on an electric wire of the target connector caused by road input or the like to the vehicle, force transmitted from the terminal fittings 20 to the circuit board 10, and the like.

In this connector 1, the circuit board 10 is sandwiched between the outer housing member 50 and the cover member 60, and, even if the external force is applied to the circuit board 10, the outer housing member 50 and the cover member 60 can receive the external force.

On the other hand, in this connector 1, the terminal fittings 20 and the inner housing 30 are supported by the circuit board 10 via the press-fit portions 22 of the terminal fittings 20. Thus, in this connector 1, if a load from the target connector at the time of engaging connection of the connector or road input or the like to the vehicle applies the external force to the terminal fittings 20 and the inner housing 30, a load is concentrated at connection portions (press-fit connection portions and soldering connection portions) between the circuit board 10 and the press-fit portions 22. Thus, to reduce the load on the connection portions between the circuit board 10 and the press-fit portions 22 by dispersing an effect of the external force, this connector 1 is configured as follows.

The inner housing 30 includes a pair of side wall surfaces 32 located at both ends in a direction orthogonal to the connector inserting and removing direction and the assembling direction (FIGS. 2, 3, and 5 to 9). This pair of side wall surfaces 32 includes a pair of side wall surfaces located at both ends in the direction orthogonal to the connector inserting and removing direction and the assembling direction in the hood portion 31. The outer housing member 50 includes, for each side wall surface 32, a side wall portion 51 of which an inner wall surface 51a is disposed facing the side wall surface 32 of the inner housing 30 (FIGS. 1 and 2). In the connector 1 of this embodiment, in each combination of the side wall surface 32 and the side wall portion 51 that are disposed facing each other, the side wall surface 32 and the inner wall surface 51a of the side wall portion 51 hold each other, so that the outer housing member 50 holds the inner housing 30.

The inner housing 30 includes a first holding portion 33 protruding from each of the paired side wall surfaces 32, and a pair of second holding portions 34 protruding from each of the paired side wall surfaces 32 while not facing the first holding portion 33 in each of the connector inserting and removing direction and the assembling direction (FIGS. 1 and 3 to 9). The outer housing member 50 includes a sandwiched portion 52 protruding from each of the inner wall surfaces 51a of the side wall portions 51 provided in a pair, extending in the assembling direction, and sandwiched between the first holding portion 33 and the pair of second holding portions 34 at each side wall surface 32 (FIGS. 1 and 3).

The first holding portion 33 includes a reference lock portion 33a located at an end portion on the pair of second holding portions 34 side in the connector inserting and removing direction and locking a first lock portion 52a, on the first holding portion 33 side, of the sandwiched portion 52 in a reference position in the connector inserting and removing direction (FIGS. 3 and 5 to 7). The pair of second holding portions 34 includes crush ribs 34a located at an end portion on the first holding portion 33 side in the connector inserting and removing direction and crushed by a second lock portion 52b, on the pair of second holding portions 34 side, of the sandwiched portion 52 (FIGS. 3, 6, 8, and 9). The sandwiched portion 52 is sandwiched between these first holding portion 33 and pair of second holding portions 34 in the connector inserting and removing direction by using the reference lock portion 33a locking the first lock portion 52a and the crush ribs 34a crushed by the second lock portion 52b.

In the connector 1 of this embodiment, the sandwiched portion 52 of the outer housing member 50 is sandwiched between the first holding portion 33 and the pair of second holding portions 34 of the inner housing 30, so that the outer housing member 50 holds the inner housing 30. Thus, if a load from the target connector at the time of engaging connection of the connector or road input or the like to the vehicle applies the external force to the terminal fittings 20 and the inner housing 30, this connector 1 can receive the force while dispersing the force to the outer housing member 50 and the connection portions between the circuit board 10 and the press-fit portions 22. This enables the connector 1 to reduce a load on the connection portions between the circuit board 10 and the press-fit portions 22, which can improve durability of these connection portions. Thus, the connector 1 of this embodiment can improve electrical reliability between the circuit board 10 and the terminal fittings 20.

Furthermore, in the connector 1 of this embodiment, the first holding portion 33 and the pair of second holding portions 34 of the inner housing 30 are disposed while not facing each other in the connector inserting and removing direction and the assembling direction. Thus, in this connector 1, the inner housing 30 can be molded using a pair of molds (not illustrated) with the mold opening direction coinciding with the connector inserting and removing direction, without using a slide core or the like.

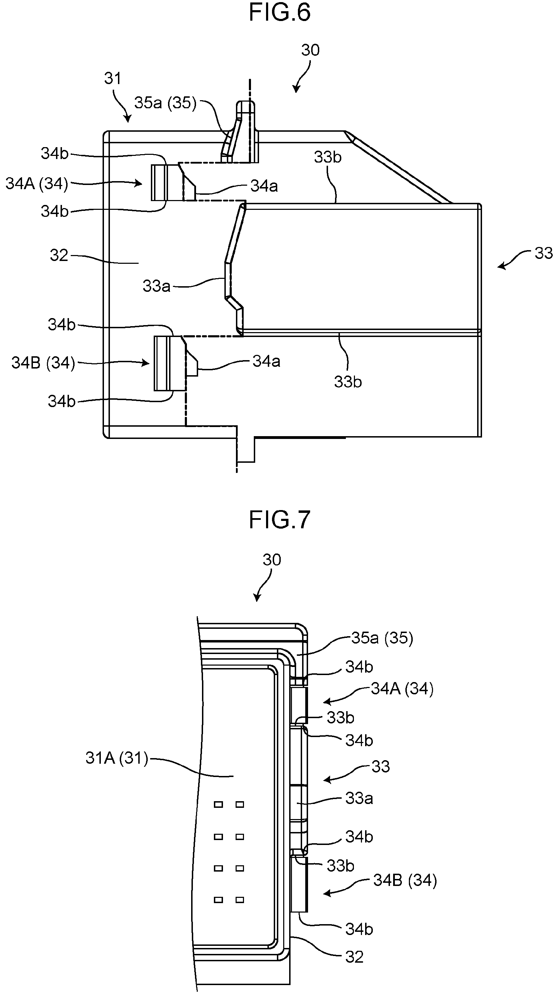

To be specific, in the connector 1 described herein, to use a pair of molds with the mold opening direction coinciding with the connector inserting and removing direction for molding the inner housing 30, the first holding portion 33, the pair of second holding portions 34, and the sandwiched portion 52 have the following arrangement and shapes. Herein, with the two-dot chain line in FIG. 6 being the parting line, one of the molds is placed on the right side relative to the parting line on paper, and the other mold is placed on the left side relative to the parting line on paper.

The first holding portion 33 and the pair of second holding portions 34 are stuck out from the side wall surface 32 formed to have a flat shape (FIGS. 1, 3, and 5 to 9). One second holding portion 34A is disposed on one side in the assembling direction relative to the first holding portion 33 (FIGS. 1, 3, and 5 to 8). The other second holding portion 34B is disposed on the other side in the assembling direction relative to the first holding portion 33 (FIGS. 1, 3, and 5 to 8).

The first holding portion 33 includes a pair of end surfaces 33b that are flat (hereinafter referred to as "flat end surface") located at both ends in the assembling direction and extending in the connector inserting and removing direction (FIGS. 3 and 5 to 9). The first holding portion 33 described herein is formed to have a plate shape including the reference lock portion 33a and the pair of flat end surfaces 33b.

The paired second holding portions 34 each include a pair of flat end surfaces 34b located at both ends in the assembling direction (FIGS. 3 and 5 to 9). The second holding portion 34 described herein is formed as a protruding portion including the crush rib 34a and the pair of flat end surfaces 34b. The paired second holding portions 34 are disposed with a gap therebetween equal to or greater than the distance between the paired flat end surfaces 33b of the first holding portion 33 in the assembling direction (FIGS. 3 and 5 to 8). Herein, the distance between the paired flat end surfaces 33b and the gap between the paired second holding portions 34 are equal.

The sandwiched portion 52 is formed to, in assembly of the inner housing 30 and the outer housing member 50, be inserted between the first holding portion 33 and the one second holding portion 34A from the one second holding portion 34A side to be sandwiched between the first holding portion 33 and the pair of second holding portions 34. The sandwiched portion 52 described herein is formed to have a rectangular rib shape extending in the assembling direction.

The inner housing 30 includes a catching portion 35 protruding from each of the paired side wall surfaces 32 and introducing the sandwiched portion 52 in contact with the first lock portion 52a between the first holding portion 33 and the one second holding portion 34A to guide the sandwiched portion 52 between the first holding portion 33 and the one second holding portion 34A in assembly of the outer housing member 50 (FIGS. 3 and 5 to 9). This catching portion 35 includes an inclined surface 35a that is closer to the opening of the hood portion 31 as assembly of the inner housing 30 and the outer housing member 50 proceeds (FIGS. 3, 5 to 7, and 9). In assembly of the inner housing 30 and the outer housing member 50, in the sandwiched portion 52, the first lock portion 52a comes into contact with the inclined surface 35a, and the first lock portion 52a is brought between the first holding portion 33 and the one second holding portion 34A while moving along the inclined surface 35a toward the opening side of the hood portion 31 as the assembly proceeds.

As described above, the connector 1 of this embodiment can be applied to the inner housing 30 with the mold opening direction coinciding with the connector engaging direction and can improve durability of the connection portions between the circuit board 10 and the press-fit portions 22 using this inner housing 30 at low cost.

In the connector according to the present embodiment, the sandwiched portions of the outer housing member are sandwiched between the first holding portions and the paired second holding portions of the inner housing, so that the outer housing member holds the inner housing. Thus, if a load from the target connector at the time of engaging connection of the connector or road input or the like to the vehicle applies the external force to the terminal fittings and the inner housing, this connector can receive the force while dispersing the force to the outer housing member and the connection portions between the circuit board and the terminal fittings. This enables the connector to reduce a load on the connection portions between the circuit board and the terminal fittings, which can improve durability of these connection portions. Thus, the connector according to the present embodiment can improve electrical reliability between the circuit board and the terminal fittings.

Furthermore, in the connector according to the present embodiment, the first holding portions and the paired second holding portions of the inner housing are disposed while not facing each other in the connector inserting and removing direction and the assembling direction. Thus, in this connector, the inner housing can be molded using a pair of molds with the mold opening direction coinciding with the connector inserting and removing direction, without using a slide core or the like.

In this way, the connector according to the present embodiment can be applied to the inner housing with the mold opening direction coinciding with the connector engaging direction and can improve durability of the connection portions between the circuit board and the terminal fittings using this inner housing at low cost.

## Claims

1. A connector (1) comprising:
a circuit board (10);
a terminal fitting (20) connected to the circuit board (10);
an inner housing (30) including a hood portion (31) configured to allow engaging connection of a target connector, the inner housing (30) accommodating and holding the terminal fitting (20) while an engaging connection portion (21) for a target terminal fitting is disposed inside the hood portion (31); and
an outer housing (40) accommodating the circuit board (10), the terminal fitting (20), and the inner housing (30) while exposing an inside of the hood portion (31),
the outer housing (40) including an outer housing member (50) and a cover member (30), the circuit board (10), the terminal fitting (20), and the inner housing (30) being sandwiched between the outer housing member (50) and the cover member (30) in an assembling direction orthogonal to a connector inserting and removing direction relative to the target connector,
the inner housing (30) including
a pair of side wall surfaces (32) located at both ends in a direction orthogonal to the connector inserting and removing direction and the assembling direction,
a first holding portion (33) protruding from each of the paired side wall surfaces (32), and
a pair of second holding portions (34) protruding from each of the paired side wall surfaces (32) while not facing the first holding portion (33) in each of the connector inserting and removing direction and the assembling direction,
the outer housing member (50) including
a first opening (50a) exposing the hood portion (31) in the connector inserting and removing direction,
a second opening (50b) opening in the assembling direction,
a side wall portion (51) provided for each of the side wall surfaces (32), an inner wall surface (51a) of the side wall portion (51) being disposed facing the side wall surface (32) of the inner housing (30), and
a sandwiched portion (52) protruding from each of the inner wall surfaces (51a) of the side wall portions (51) provided in a pair, the sandwiched portion extending in the assembling direction and being sandwiched between the first holding portion (33) and the pair of second holding portions (34) at each of the side wall surfaces (32),
the outer housing member (60) being assembled to the cover member (60) so that the second opening (50b) is closed,
the first holding portion (33) including a reference lock portion (33a) located at an end portion on a side having the pair of second holding portions (34) in the connector inserting and removing direction, the reference lock portion (33a) locking a first lock portion (52a), on a side having the first holding portion (33), of the sandwiched portion (52) in a reference position in the connector inserting and removing direction,
the pair of second holding portions (34) including crush ribs (34a) located at an end portion on a side having the first holding portion (33) in the connector inserting and removing direction, the crush ribs (34a) being crushed by a second lock portion (52b), on a side having the pair of second holding portions (34), of the sandwiched portion (52), and
the sandwiched portion (52) being sandwiched between the first holding portion (33) and the pair of second holding portions (34) in the connector inserting and removing direction by using the reference lock portion (33a) locking the first lock portion (52a) and the crush ribs (34a) crushed by the second lock portion (52b).

2. The connector (1) according to claim 1, wherein
one of the second holding portions (34A) is disposed on one side in the assembling direction relative to the first holding portion (33), and
another of the second holding portions (34B) is disposed on another side in the assembling direction relative to the first holding portion (33).

3. The connector (1) according to claim 2, wherein
the first holding portion (33) includes a pair of flat end surfaces (33b) located at both ends in the assembling direction and extending in the connector inserting and removing direction, and
the paired second holding portions (34) are disposed with a gap therebetween equal to or greater than a distance between the paired flat end surfaces (33b) of the first holding portion (33) in the assembling direction.

4. The connector (1) according to claim 3, wherein
the first holding portion (33) and the pair of second holding portions (34) are stuck out from the side wall surface (32) formed to have a flat shape.

5. The connector (1) according to claim 1, 2, 3, or 4, wherein
the sandwiched portion (52) is formed to be inserted between the first holding portion (33) and the one second holding portion (34A) from a side having the one second holding portion (34A) to be sandwiched between the first holding portion (33) and the pair of second holding portions (34), and
the inner housing (30) includes a catching portion (35) protruding from each of the paired side wall surfaces (32) and introducing the sandwiched portion (52) in contact with the first lock portion (52a) between the first holding portion (33) and the one second holding portion (34A).
